Europäisches Patentamt

European Patent Office

Office européen des brevets

(11) Publication number: **0 225 196**
A1

(12) **EUROPEAN PATENT APPLICATION**

(21) Application number: 86309396.9

(22) Date of filing: 02.12.86

(51) Int. Cl.⁴: **E 05 B 49/00**
G 07 C 9/00, G 10 L 5/06

(30) Priority: 04.12.85 GB 8529926

(43) Date of publication of application:
10.06.87 Bulletin 87/24

(84) Designated Contracting States:
AT BE CH DE ES FR GB GR IT LI LU NL SE

(71) Applicant: BRITISH TELECOMMUNICATIONS plc
British Telecom Centre 81 Newgate Street
London EC1A 7AJ(GB)

(72) Inventor: Millar, Paul Christopher
25 Bath Road
Felixstowe Suffolk(GB)

(74) Representative: Lloyd, Barry George William et al,
Intellectual Property Unit British Telecom Room 1304 151
Gower Street
London WC1E 6BA(GB)

(54) **Voice-operated locks.**

(57) An access security device for a lock (1) has a microphone (2) for input of a password; normal operation is by recognition (3) of the speaker and releases the lock, security being preserved by actuation of an alarm (5).

Croydon Printing Company Ltd.

The present invention relates to voice-operated locks.

A voice-operated door is one such application, where an electrically operated bolt is operable to unlock the door under a control of a speaker recognition unit. Speaker recognition and speech recognition units operate, broadly, by conducting a spectral analysis of input speech from (in this instance) a microphone. The results may typically consist of a set of readings representing the relative energy content in a number (eg 8 or 16) frequency bands, at intervals of, say, 20ms. These results are then assessed by comparison with a "template" - ie, a set of results obtained during a training sequence. Rarely of course will an exact match be obtained since there will be variations between utterances of a given word by a speaker, and rather larger variations between different speakers. Therefore one proceeds by obtaining a "score" from the comparison, eg the sum of the absolute differences between the results and the template. For a given word, a score of zero represents an exact match. A single speaker may obtain scores of up to 16 (on an arbitrary scale) whilst other speakers may be within 24. For speech recognition, a threshold of 30 might be set as the criterion for recognition of the particular word: 50 would be too high since other words might then be falsely recognised. Speaker recognition, where it is desired to distinguish the utterance of a password by an authorised person from the same word uttered by some other person, would require a threshold of perhaps 18.

0225196

The inventor has recognised that although a speaker recognition unit used for - eg - a voice operated door for a safe or bank vault provides generally satisfactory results, a persons voice is affected by situations of extreme stress, such as a robbery, for example.

In one aspect, therefore, the present invention provides an access security devices comprising voice recognition means arranged to recognise at least one first word with a recognition threshold such as to provide a high probability of response to one particular speaker and a low probability of response to other speakers and to recognise at least one other word with a relaxed recognition threshold.

Reference to relaxed recognition threshold should be clarified since the "scores" referred to above will not in general be numerically the same for different words for the same probability. By this term we mean that the threshold will be greater than that which would be set to provide the same probability of recognition as for the first word.

Preferably the threshold is set at speech recognition level so that, for example, an access device for a bank vault would contain a template(s) for recognition of word(s) spoken by one or more authorised staff, and one for recognition of an "emergency password" (ie the 'other' word) spoken by any person.

This of course represents reduction of security and it is therefore envisaged that use of the other word would trigger an alarm, either locally or at the local police station or other remote location, and might also initiate any emergency strategy such as the operation of surveillance or monitoring equipment.

Some embodiments of the invention will now be described with reference to the accompanying drawings, in which:

Figure 1 is a block diagram of one version of an access security device according to the present invention; and

Figure 2 is a similar diagram of a second version.

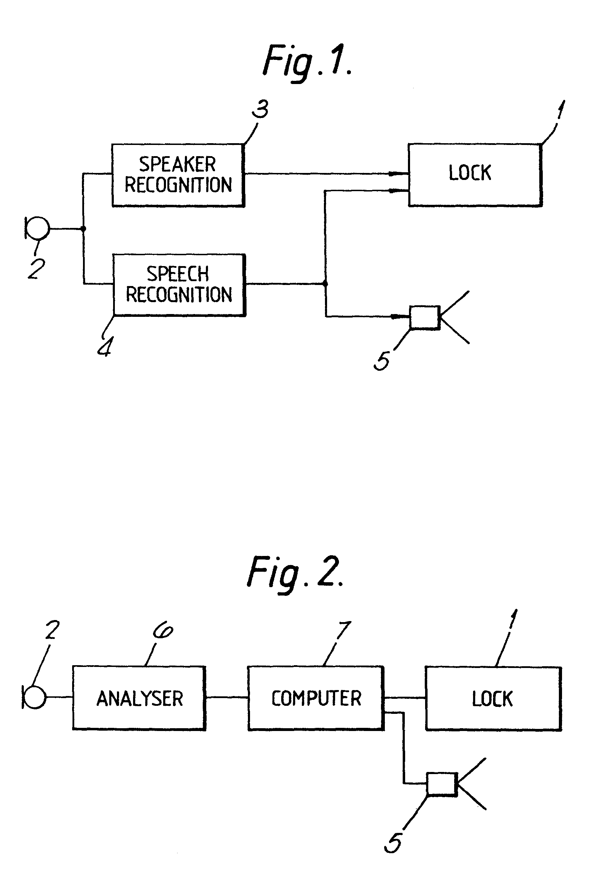

In Figure 1, operation of a lock 1 is effected by speaking into a microphone 2. A recognition unit is illustrated schematically as speaker recognition unit 3 which releases the lock 1 when the speaker is recognised and speech recognition unit 4 which, when an emergency password is recognised, both releases the lock and actuates an alarm 5.

Figure 2 shows a more practical arrangement. The lock 1, microphone 2 and alarm 5 are again shown. The recognition unit comprises,a speech analyser 6, a microcomputer 7 and a store 8.

The speech analyser can be a known analyser such as the "Vecsys" analyser, manufactured by Messrs Vecsys of Bièvres, France. The analyser receives speech samples at its input and compares them with a number of templates generated during a training sequence. For the system described, the analyser will have been given the voices of all authorised users uttering the password (which may or may not be the same for each user) and will thus already store templates for each. Templates for the emergency password are generated similarly (or a single, average template may cover all users). The analyser has an output port to which it supplies a code identifying the template to which a word uttered most closely corresponds, along with the corresponding score (as discussed above).

The microcomputer 7 has an input port connected to the output port, and serves to decide upon appropriate action when the code and score appear and implement such action via output ports connected to the lock 1 and claim 5. The store 8 contains, for each code, a decision threshold value (the generation of which will be described below). The microcomputer has access to the store 8 and is programmed to respond to the appearance of the code and score as follows:

1. retrieve from the store 8 the threshold value corresponding to the code received

2 compare the received score with the threshold value and,

if the score exceeds the threshold value, take no action

3. if the score is less than or equal to the threshold value (a) release the lock 1 and (b) if the code corresponds to the emergency password, actuate the alarm 5.

The threshold values require further explanation. Each template for the analyser is generated from an audio input from the authorised user in question uttering the password. A few subsequent training utterances by the same user will (with the analyser referred to) give scores in a certain error range, 0 to 20 for example, and therefore the threshold is set at a slightly higher value, eg 25 to allow a small margin of error. Another user will, during training, give a different error range with his templates perhaps 0 to 30 and the threshold value might be set to 35. Thus different thresholds are obtained for each user.

In the case of the emergency password, a threshold value will be set which is usually (though not necessarily) higer than those for the normal passwords; the essential feature is that it has a much larger margin of error. For example if the error range for a given user and his emergency template is 20, then the margin might be 30 rather than 5, and the threshold value hence 50 instead of 25.

Where a single template is used for the emergency password, the threshold value may then be devised by determining the error range over a sample of users, and adding a small margin to this.

Alternatively, the threshold test might be omitted in the case of the emergency password - ie. the threshold value is infinite. In this case, where the code received by the microcomputer corresponds to the emergency password, step (3) of the above sequence is carried out irrespective of the value of the score.

0225196

## CLAIMS

1. An access security device comprising voice recognition means arranged to recognise at least one first word with a recognition threshold such as to provide a high probability of response to one particular speaker and a low probability of response to other speakers, and to recognise at least one other word with a relaxed recognition threshold.

2. A device according to claim 1 including means for output of alarm signal upon recognition of the said other word.

1/1

0225196

## Fig.1.

## Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 099 476 (TOKYO SHIBAURA DENKI KABUSHIKI KAISHA) * Figure 1; page 2, line 33 - page 4, line 34 * | 1 | E 05 B   49/00 G 07 C    9/00 G 10 L    5/06 |
| Y | FR-A-1 418 667 (INSTITUTE FOR SCIENTIFIC INFORMATION) * Figures 10,11; page 4, left-hand column, line 35 - right-hand column, line 12 * | 1 | |
| A | US-A-3 881 171 (C.J. MOORMAN et al.) * Figures 1,2; column 9, lines 26-60 * | 2 | |
| A | DE-A-2 505 890 (HORN) | 1 | TECHNICAL FIELDS SEARCHED (Int. Cl.4) |
| A | EP-A-0 059 985 (NISSAN MOTOR CO.) | 1 | E 05 B G 07 C G 10 L |

The present search report has been drawn up for all claims

| Place of search | Date of completion of the search | Examiner |
|---|---|---|
| THE HAGUE | 05-03-1987 | HERBELET J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82